# EUROPÄISCHE PATENTANMELDUNG

(11) **EP 1 244 056 A1**
(43) Veröffentlichungstag der Anmeldung: **25.09.2002**
(21) Anmeldenummer: 00902034.8
(22) Anmeldetag: 01.02.2000
(51) Int. Cl.: G06N 3/00, G06T 7/00

(54) **EINGANGSSIGNAL-ERKENNUNGSSYSTEM MIT LERNFUNKTION DURCH FEEDBACK**

(30) Priorität: 01.02.1999 JP 5910699
(71) Anmelder: Cai Co., Ltd., Tokyo 111-0042 (JP)
(72) Erfinder: RYU, Tadamitsu, Taito-ku, Tokyo 111-0031 (JP)
(74) Vertreter: Lorenz, Werner, Dr.-Ing.
(86) Internationale Anmeldenummer: JP0000534
(87) Internationale Veröffentlichungsnummer: WO00046747

(57) **Zusammenfassung**

Die notwendigen Informationen des Erkennungszieles werden im Voraus definiert und ein Eingangssignal von dem Sensor wird nur dann abgefragt, wenn es die Definition erfüllt, so daß die Erkennungsdisposition nur zu diesem Zeitpunkt durchgeführt wird. Darüber hinaus führt der Bediener eine Rückmeldung in bezug auf das Erkennungsergebnis durch, so daß es bei der Erkennungspräzision eine wachsende Funktion aufweist.

Bei der Eingangssignalerkennung von dem Sensor kann es über die Eingangssignalerkennung insbesondere dann wirksam verfügen, wenn ein großer Betrag an Sensorinformationen vorhanden ist.

## Beschreibung

Die vorliegende Erfindung betrifft ein Erkennungssystem für verschiedene Informationen, bei dem ein Computer verwendet wird, und betrifft insbesondere ein System, bei dem die Erkennungsdisposition der von verschiedenen Sensoren aufgenommenen Daten durch Verwendung eines Computers effizient gemacht wird. Darüber hinaus betrifft sie ein System zur Planung der Verbesserung einer Erscheinungserkennungsrate, wobei, in bezug auf das unmöglich zu erkennende Objekt, die Disposition einer Anfrage an ein menschliches Wesen wahrgenommen, bzw. die Beurteilungen des menschlichen Wesens eingeholt, und als Beispieldaten gesammelt werden.

### Stand der Technik

Zu Erkennung verschiedener Informationen wurden diese herkömmlicherweise von vielen Sensoren aufgenommen und die Informationen digital umgewandelt, wobei eine Erkennungsdisposition durch eine der Notwendigkeit entsprechende Vielfalt von Vorgängen ausgeführt wurde. Insbesondere bei einem Bild wurden viele Dispositionen erstellt, um notwendige Informationen zu abstrahieren und sie dann zu erkennen. So wurde beispielsweise ein Erkennungsziel und Hintergrund mit viel Aufwand an Zeit und Hardware getrennt. Das heißt, wenn es sich um einen sich bewegenden Körper handelte, wurde jedes Mal ein Bild gespeichert und dann so verglichen, daß die Trennung des Hintergrundes durch den Vergleich eines unveränderten Teils mit einem veränderten Teil ausgeführt wurde.

Wie oben erwähnt, wurden beim Stand der Technik Informationen durch verschiedene Sensoren empfangen und durch Digitalisierung verwendet. Doch bei Vorhandensein von vielen Sensoren nahmen die von Sensoren aufgenommenen Informationen ein enormes Volumen an, oder eine Dispositionsbedingung wurde komplex, was zum Ergebnis hatte, daß viel Zeit zur Verwendung der Erkennung benötigt wurde. Gleichzeitig wurde der Umfang des Systems zu groß, und daher war eine Vermarktung nicht realistisch.

Daher besteht die Aufgabe der vorliegenden Erfindung darin, ein Eingangssignalerkennungssystem zu konstruieren, das mit tatsächlich brauchbarer Arbeitsgeschwindigkeit oder um ein in realistischem Umfang reduziertes Maß aufweist, indem die Nachteile des Standes der Technik beseitigt wurden.

Darüber hinaus wurde, wenn die Sensorinformationen verwendet wurden und eine Erkennung durchgeführt wurde, in der Tat in fast allen Fällen der größte Teil der Ressourcen für den Vordispositionsschritt verwendet, für das das System Beurteilungen vornahm. Doch da diese Daten nicht mit der Beurteilung in Zusammenhang standen und ebenfalls verwendet wurden, waren diese wirklich nutzlos. Durch die Beseitigung der obigen nutzlosen Disposition wird es möglich, die Arbeitsgeschwindigkeit zu erhöhen und ein System mit vernünftigem Umfang zu konstruieren, d. h. mit der vorliegenden Erfindung wird ein System realisiert, das nur notwendige Daten verwendet, die für die Beurteilung notwendig sind, um notwendige Beurteilungen vorzunehmen.

Insbesondere bei der Bilderkennung unter den vorliegenden Bedingungen war es notwendig, den enormen Umfang an Bilddaten zu beseitigen. Der obige enorme Umfang an Bilddaten umfaßte die Daten, die für keine Beurteilung notwendig waren. Durch die vorliegende Erfindung wird ein System realisiert, das nur notwendige Bilddaten verwendet, um notwendige Beurteilungen vorzunehmen.

### Offenbarung der Erfindung

Zur Lösung der oben erwähnten Probleme werden Sensoren bei der vorliegenden Erfindung mit Intelligenz ausgerüstet, d. h. es werden Speicher eingerichtet, die Vergleichsdaten zur Beurteilung auf den Sensoren oder unmittelbar hinter den Sensoren speichern. Hierbei wird die Datendefinition zwecks Vergleich vom Computer bereitgestellt und in dem Speicherteil eingerichtet. Weiterhin ist ein Vergleichsteil so vorgesehen, daß es von den Sensoren gesammelte Informationen mit der eingerichteten Definition vergleicht und das Erkennungssignal nur dann ausgibt, wenn es sich bei den Sensorinformationen um dieselben handelt wie bei der eingerichteten Datendefinition.

In der Tat umfaßt bei dem Erkennungsziel-Identifikationscomputersystem das System den/die folgende(n) Sensor(en); Datendispositionsteil(e) das/die eine Vordisposition von Daten vornimmt/vornehmen, die von dem/den Sensor(en) erkannt wird/werden; ein Definitionseinrichtungsteil, das mit einer Datenbank (einem Objektdefinitionswörterbuch) verbunden ist, die mindestens eine Datendefinition eines Erkennungszieles besitzt; und ein Objekt, das die Vordispositionsdaten mit einer zuvor eingerichteten Definition und Bedingung vergleicht und zündet; und, wobei das Definitionseinrichtungsteil die Datendefinition auf dem Objekt einrichtet.

Die Dispositionsvorgänge umfassen zu diesem Zeitpunkt folgendes:
A: Einen Schritt, in dem jeweils die Datendefinition jeweils auf dem Objekt gemäß dem Erkennungsziel eingerichtet wird;
B: Einen Schritt, in dem die Daten des Erkennungszieles von dem/den Sensor(en) aufgenommen werden;
C: Einen Schritt, in dem eine Vordisposition der Daten erfolgt;
D: Einen Schritt, in dem die Vordispositionsdaten mit der zuvor eingerichteten Datendefinition verglichen und gezündet werden, um das Erkennungssignal nur dann auszugeben, wenn Erkennungszieldaten vorhanden sind, die der Definition entsprechen;
E: Einen Schritt, in dem die Daten zurückgesetzt werden, die das Objekt gemäß der zuvor eingerichteten Definition empfing;
F: Einen Schritt, in dem das Erkennungssignal ausgegeben wird, wenn die Erkennung des Eingangssignals abgeschlossen ist.

Und wenn zu viele Sensoren vorhanden sind und eine Zündbedingung komplex ist, ist es besser, wenn folgendes enthalten ist: Sensor(en); Datendispositionsteil(e) das/die eine Vordisposition von Daten vornimmt/vornehmen, die von dem/den Sensor(en) erkannt wird/werden; ein Definitionseinrichtungsteil, das mit einer Datenbank (einem Objektdefinitionswörterbuch) verbunden ist, die eine Datendefinition jeweiliger Erkennungsteile eines Erkennungszieles und eine Objektdefinition besitzt; und Erkennungssignal-Übertragungsobjekte, die Ausgaben von den anderen Objekten übernehmen und dieselben mit der zuvor eingerichteten Definition und Bedingung vergleichen und zünden; Erkennungsziel-Beurteilungsobjekte, die die Vordispositionsdaten mit zuvor eingerichteten Definitionen und Bedingungen vergleichen und zünden; und wobei das Definitionseinrichtungsteil die Datendefinition auf dem Erkennungsziel-Beurteilungsobjekt einrichtet, nachdem dasselbe von der Datenbank genommen wurde, während die Objektdefinition auf dem Erkennungssignal-Übertragungsobjekt eingerichtet wird.

Die Dispositionsvorgänge umfassen zu diesem Zeitpunkt folgendes:
A: Einen Schritt, in dem jeweils die Datendefinition auf dem jeweiligen Erkennungsziel-Beurteilungsobjekt eingerichtet wird, während die jeweilige Objektdefinition auf dem jeweiligen Erkennungssignal-Übertragungsobjekt gemäß dem Erkennungsziel eingerichtet wird;
B: Einen Schritt, in dem eines der Erkennungssignal-Übertragungsobjekte als ein Ausgabeort zu den Erkennungsziel-Beurteilungsobjekten bezeichnet wird, wenn die betroffene Datendefinition und die Zünddefinition erfüllt ist;
C: Einen Schritt, in dem von dem/den Sensor(en) aufgenommene Daten des Erkennungszieles übernommen werden;
D: Einen Schritt, in dem eine Vordisposition der Daten erfolgt;
E: Einen Schritt, in dem die Informationen dem zuvor festgelegten Erkennungssignal-Übertragungsobjekt mitgeteilt werden, wenn Vordispositionsdaten vorhanden sind, die der Datendefinition entsprechen;
F: Einen Schritt, in dem die Ausgabe von dem zuvor festgelegten Objekt nur dann übernommen wird, wenn es durch dasselbe im Voraus informiert wurde;
G: Einen Schritt, in dem die von ihm selbst besessenen zurückbehaltenen Daten gemäß einer Notwendigkeit der Definition zurückgesetzt werden;
H: Einen Schritt, in dem die Ausgabe von dem zuvor festgelegten Objekt mit der Objektdefinition verglichen wird, und die Informationen dem Erkennungssignal-Übertragungsobjekt nur dann mitgeteilt werden, wenn sie die Objektdefinition und die Zündbedingung erfüllt;
I: Einen Schritt, in dem das Erkennungssignal ausgegeben wird, wenn die Ausgabe von dem zuvor festgelegten Objekt die Definition an dem Erkennungssignal-Übertragungsobjekt höchsten Niveaus erfüllt.

Und wenn die Erkennung des Eingangssignals nicht gut ausgeführt wurde, ist es besser, die folgenden Schritte hinzuzufügen, d. h.:
A: Einen Schritt, in dem der Fehler bei der Erkennung des Eingangssignals gefunden wird;
B: Einen Schritt, in dem eine Anfrage an den Bediener gerichtet wird;
C: Einen Schritt, in dem eine Antwort von dem Bediener empfangen wird;
D: Einen Schritt, in dem die Antwort in dem Objektdefinitionswörterbuch registriert wird.

Damit die Eingangssignalerkennung immer über die neuesten Informationen verfügt, muß jedes Objekt dauernd beobachtet werden, und wenn ein Teil der Zündbedingung des Objektes erfüllt ist, ermittelt sie ein dazugehöriges Objekt, um das Objekt zünden zu lassen und/oder damit es in dem vorliegenden System mit einem DEMON ausgerüstet wird, wodurch ein Speicher zurückgesetzt wird.

Da auf diese Weise nur notwendige Informationen an dem/den Sensor(en) oder unmittelbar hinter dem/den Sensor(en) verwendet werden, kann eine nutzlose Disposition beseitigt werden. Dadurch wird die effiziente Eingangssignalerkennung möglich. Insbesondere bei der Bilderkennung kann die Erkennung mit realistischer Systemkonstruktion ohne praktische Probleme mit ihrer Arbeitsgeschwindigkeit ohne Durchführung eines großen Betrages an Disposition erzielt werden, da es genügt, das geringste Volumen der notwendigen Disposition ohne Verwaltung eines großen Betrages an Disposition herzustellen.

### Kurzerklärung der Zeichnungen

- Fig. 1: ist ein Blockdiagramm, das eine Ausführung des Erkennungsziel-Identifikationscomputersystems in Übereinstimmung mit der vorliegenden Erfindung darstellt.
- Fig. 2: ist ein Blockdiagramm, das die zweite Ausführung des Erkennungsziel-Identifikations-computersystems in Übereinstimmung mit der vorliegenden Erfindung darstellt.
- Fig. 3: ist eine Datentabelle, die die Datendefinition darstellt, die in das Erkennungsziel-Beurteilungsobjekt des Erkennungsziel-Identifikationscomputersystems eingegeben wird, wie in Fig. 2 dargestellt.
- Fig. 4: ist eine Datentabelle, die die Zündbedingung und ihre Disposition anzeigt, die in das Erkennungsziel-Beurteilungsobjekt des Erkennungsziel-Identifikationscomputersystems eingegeben wird, wie in Fig. 2 dargestellt.
- Fig. 5: ist eine Datentabelle, die die Temperaturdaten darstellt, die als Beurteilungsergebnis eines jeden der Erkennungsziel-Beurteilungsobjekte ausgegeben werden.
- Fig. 6: ist eine Datentabelle, die die Zündbedingung und ihre Disposition darstellt, die in das Erkennungsziel-Beurteilungsobjekt des Erkennungsziel-Identifikationscomputersystems eingegeben wird, wie in Fig. 2 dargestellt.
- Fig. 7: ist ein Blockdiagramm, das die dritte Ausfüh rung des Erkennungsziel-Identifikationscomputersystems in Übereinstimmung mit der vorliegenden Erfindung darstellt.

### Bester Modus der Erfindung

### (Erste Ausführung)

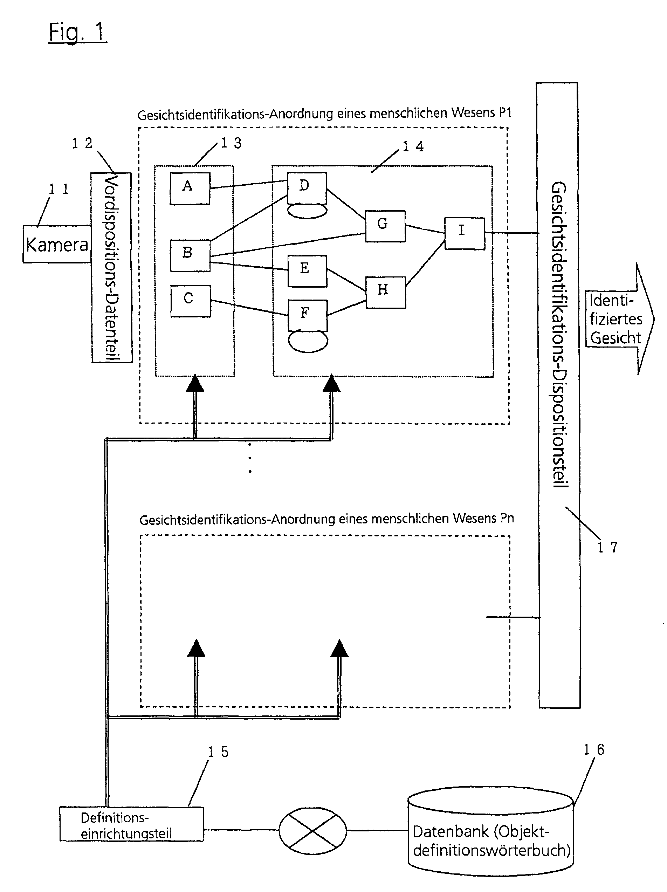

Fig. 1 ist die erste Ausführung der vorliegenden Erfindung, und sie verwendet oder analysiert mit hoher Geschwindigkeit bei paralleler Disposition eines oder mehrerer menschlicher Wesen seine/ihre Gesichtsmerkmale und wendet sie zur Identifikation an.

11 ist ein Eingangssensor oder eine Kamera, die die Merkmale von Gesichtern als Bilddaten aufnimmt. 12 ist ein Bilddispositionsteil oder ein Bild-Vordispositionsteil, das Bildzielteile von Augen, Nase, Mund usw. als Gesichtsfaktor von Bilddaten zerschneidet, die von der Kamera 11 aufgenommen wurden, und zwar mittels Mustervergleich usw.

13 ist ein Erkennungsbereich, der eine Gruppe der Erkennungsziel-Beurteilungsobjekte A-C umfaßt, und der Gesichtselemente auf der Grundlage der Bilddaten von dem Bild-Vordispositionsteil 12 findet und sein Ergebnis an ein dazugehöriges Objekt überträgt. Währenddessen sind A, B und C zu findende Objekte; A für die Augen, B für die Nase und C für den Mund.

Für jedes Objekt A, B und C zur Erkennung von Augen, Nase und Mund werden notwendige Daten und Verfahren für die Erkennungszielbeurteilung durch das Definitionsteil 15 eingerichtet. 14 ist ein Erkennungssignal-Übertragungsbereich, der jedes Teil (Augen, Nase und Mund) bewertet, wobei die Arten der bei jedem Objekt verwendeten Bewertung und die Zündbedingung der Signalübertragung durch das Definitionseinrichtungsteil 15 eingerichtet wird. D ist ein Objekt, das eine vergleichende Bewertung von Augen und Nase und deren Vergleichsbild vornimmt. Es überträgt sein Erkennungssignal und besitzt auch die Funktion der Umwandlung von Selbstausgabe zu Selbsteingabe oder Selbstbezeichnung. E ist ein Objekt, das eine vergleichende Bewertung der Nase vornimmt und sein Erkennungssignal überträgt. F ist ein Objekt, das eine vergleichende Bewertung des Mundes vornimmt und sein Erkennungssignal überträgt. Es besitzt auch die Funktion der Umwandlung von Selbstausgabe zu Selbsteingabe oder Selbstbezeichnung.

G ist ein Objekt, das D (das Objekt, das eine Bewertung von Augen und Nase und ihres Vergleichsbildes durchführt, um sein Erkennungssignal zu übertragen) und B (ein Objekt, das eine Bewertung der Nase durchführt, um sein Erkennungssignal zu übertragen) zusammensetzt, so daß die kombinierten Erkennungssignale mit denjenigen eines zu identifizierenden Gesichtes verglichen werden können, und überträgt dessen Übereinstimmungsniveau. H ist ein Objekt, das E (das Objekt, das eine Bewertung der Nase durchführt und sein Erkennungssignal überträgt) und F (ein Objekt, das eine Bewertung des Mundes durchführt und sein Erkennungssignal überträgt) zusammensetzt, so daß die kombinierten Erkennungssignale mit denjenigen eines zu identifizierenden Gesichtes verglichen werden können, und überträgt dessen Übereinstimmungsniveau. I ist ein Objekt, das eine allgemeine Bewertung des Gesichtes auf der Grundlage der von G und H übertragenen Bewertungsergebnisse durchführt.

Hierbei wird jedes Verhältnis einer in Fig. 1 dargestellten Gruppe von Objekten A, B, C, ...H, I detailliert erklärt. An A-C in dem Erkennungsbereich 13 werden alle Bildkenndaten eines Zielteils von dem Bild-Vordispositionsteil 12 übermittelt oder dort eingerichtet.

In A werden durch das Definitionseinrichtungsteil 15 Augen eines menschlichen Wesens P1 im Voraus als Identifikationsobjektziel der Bildkenndaten eingerichtet, wobei es alle Zielteile des zu identifizierenden Objektes abstrahiert, wobei das Augen-Übereinstimmungsniveau über 70% liegt und das Erkennungssignal zu dem Erkennungssignal-Übertragungsobjekt D in dem Erkennungssignal-Übertragungsbereich 14 übertragen wird. Wenn das Übereinstimmungsniveau verglichener Teile unter dem Gatterwert (in diesem Fall unter 70%) liegt, zündet dieses Objekt nicht.

In B wird durch das Definitionseinrichtungsteil 15 die Nase eines menschlichen Wesens P1 im Voraus als Identifikationsobjektziel der Bildkenndaten eingerichtet, wobei es alle Zielteile des zu identifizierenden Objektes abstrahiert, wobei das Nasen-Übereinstimmungsniveau über 60% liegt und das Erkennungssignal zu den Erkennungssignal-Übertragungsobjekten D, G und E in dem Erkennungssignal-Übertragungsbereich 14 übertragen wird. Wenn das Übereinstimmungsniveau verglichener Teile unter dem Gatterwert (in diesem Fall unter 60%) liegt, zündet dieses Objekt nicht.

In C wird durch das Definitionseinrichtungsteil 15 der Mund eines menschlichen Wesens P1 im Voraus als Identifikationsobjektziel der Bildkenndaten eingerichtet, wobei es alle Zielteile des zu identifizierenden Objektes abstrahiert, wobei das Mund-Übereinstimmungsniveau über 80% liegt und das Erkennungssignal zu dem Erkennungssignal-Übertragungsobjekt D in dem Erkennungssignal-Übertragungsbereich 14 übertragen wird. Wenn das Übereinstimmungsniveau verglichener Teile unter dem Gatterwert (in diesem Fall unter 80%) liegt, zündet dieses Objekt nicht.

In dem Erkennungssignal-Übertragungsobjekt D in dem Erkennungsziel-Übertragungsbereich 14 wird im Voraus durch das Definitionseinrichtungsteil 15 eine Bedingung eingerichtet, wobei es dann zündet, wenn das Übereinstimmungsniveau des Signals von A über 95% liegt, eine Disposition, wobei ein Signal von demselben A nach 0,3 Sekunden durch einen Verzögerungszeitgeber in dasselbe eingegeben wird, wobei keine Zündung erfolgt, wenn das Übereinstimmungsniveau des Signals von A nicht über 95% liegt, eine Anforderung, wobei in dem Falle, daß ab einer Eingabe von Signal A oder B 0,2 Sekunden vergangen sind und das andere Signal nicht ankommt, ein Signal erforderlich ist, das zu dem Ursprungssignal des nicht angekommenen Signals gesendet werden muß, oder eine Funktion, wobei diese den Grund für die Nichtversendung zu dem Ursprungsobjekt des Signals bestätigt. In bezug auf das Objekt D besteht der Grund für die Verwendung des Verzögerungszeitgebers bei Augen als Objekten darin, daß Blinzeln auftritt, und wenn ein Bild mit Blinzeln eingegeben wird, sinkt das Übereinstimmungsniveau bemerkenswert ab. Daher verzögert dieser die Zeit und fügt die Funktion der erneuten Bewertung hinzu. Wenn dieses Objekt zündet, wird das Erkennungssignal zu G übertragen.

In dem Erkennungssignal-Übertragungsobjekt E in dem Erkennungsziel-Übertragungsbereich 14 wird im Voraus durch das Definitionseinrichtungsteil 15 eine Bedingung eingerichtet, wobei es dann zündet, wenn das Übereinstimmungsniveau des Signals von B über 80% liegt, und dann das Erkennungssignal zu H übertragen wird.

In dem Erkennungssignal-Übertragungsobjekt F in dem Erkennungsziel-Übertragungsbereich 14 wird im Voraus durch das Definitionseinrichtungsteil 15 eine Bedingung eingerichtet, wobei es dann zündet, wenn das Übereinstimmungsniveau des Signals von C über 90% liegt, oder eine Disposition, wobei ein Signal von demselben C nach 0,5 Sekunden durch einen Verzögerungszeitgeber in dasselbe eingegeben wird, wobei keine Zündung erfolgt, wenn das Übereinstimmungsniveau des Signals von C nicht über 90% liegt. In bezug auf das Objekt F besteht der Grund für die Verwendung des Verzögerungszeitgebers darin, daß beim Mund als Objekt, wenn das Bild eines sich bewegenden Mundes eingegeben wird, das Übereinstimmungsniveau bemerkenswert absinkt. Daher verzögert dieser die Zeit und fügt die Funktion der erneuten Bewertung hinzu. Wenn dieses Objekt zündet, wird das Erkennungssignal zu G übertragen.

In dem Erkennungssignal-Übertragungsobjekt G in dem Erkennungsziel-Übertragungsbereich 14 wird im Voraus durch das Definitionseinrichtungsteil 15 eine Bedingung eingerichtet, wobei es dann zündet, wenn das Übereinstimmungsniveau des Signals von D oder B über 97% liegt, und/oder es zündet, wenn das Übereinstimmungsniveau ihrer kombinierten Bewertung höher als der Gatterwert (in diesem Fall 97%) liegt. Bei einer Zündung wird das Erkennungssignal zu I übertragen. Wenn das Übereinstimmungsniveau unter dem Gatterwert (in diesem Fall 97%) liegt, zündet dieses Objekt nicht.

In dem Erkennungssignal-Übertragungsobjekt H in dem Erkennungsziel-Übertragungsbereich 14 wird im Voraus durch das Definitionseinrichtungsteil 15 eine Bedingung eingerichtet, wobei es dann zündet, wenn das Übereinstimmungsniveau des Signals von E oder F über 87% liegt, und/oder es zündet, wenn das Übereinstimmungsniveau ihrer kombinierten Bewertung über dem Gatterwert (in diesem Fall 87%) liegt. Bei einer Zündung wird das Erkennungssignal zu I übertragen. Wenn das Übereinstimmungsniveau unter dem Gatterwert (in diesem Fall 87%) liegt, zündet dieses Objekt nicht.

In dem Erkennungssignal-Übertragungsobjekt I in dem Erkennungsziel-Übertragungsbereich 14 wird im Voraus durch das Definitionseinrichtungsteil 15 eine Bedingung eingerichtet, wobei es dann zündet, wenn das Übereinstimmungsniveau des Signals von G über dem Gatterwert (in diesem Fall 70%) liegt, eine Bedingung eingerichtet, wobei es dann zündet, wenn das Übereinstimmungsniveau des Signals von H über 80% liegt, eine Bedingung eingerichtet, wobei es dann zündet, wenn das Übereinstimmungsniveau der kombinierten Bewertung von E und F über dem Gatterwert (in diesem Fall 87%) liegt, eine Funktion, wobei diese den Grund für die Nichtversendung an H bestätigt, wenn ab einer Eingabe von Signal G 0,5 Sekunden vergangen sind und das Signal von H nicht ankommt, oder eine Funktion, wobei es unter anderen Bedingungen nicht zündet. Im Falle einer Zündung wird das Signal zu einem Gesichtsidentifikations-Dispositionsteil 17 übertragen.

Wenn H eine Anfrage erhält und nicht selbst den Grund weiß, richtet es auch eine Anfrage an die Quelle. In diesem Fall, wenn das Signal von E über dem Gatterwert liegt, aber das Signal von F unter dem Gatterwert (87%) liegt, ist es möglich, ein Anfragesignal an F zu senden. Wenn beispielsweise der Grund darin besteht, daß das Übereinstimmungsniveau des Mundbildes bei F niedrig ist, überträgt es diese Situation an H und I. In I zeigt es dem Bediener das betroffene Bild und stellt eine Anfrage in bezug auf die Disposition.

Wenn die zu identifizierende Person eine Maske trägt, bestätigt der Bediener, daß der Mann eine Maske trägt, durch das Bild. Dann wird eine Maske als eine Art Mund als Wissenselement der Datenbank 16 hinzugefügt, um einen höheren Bewertungspunkt festzulegen, wobei die zusätzliche Definition C durch das Definitionseinrichtungsteil 15 hinzugefügt wird. Nach der zusätzlichen Definition ist auch die Identifikation einer Person möglich, die eine Maske trägt. Wenn in bezug auf eine Definition zu H definiert wird, daß es möglich ist, daß ein Mann eine Maske trägt, wenn das Übereinstimmungsniveau weit unter dem Gatterwert liegt, beispielsweise unter 40%, wird der Mann gebeten, die Maske abzunehmen, wodurch die Erkennungsrate weiter verbessert wird.

Bei dem Gesichtsidentifikations-Dispositionsteil 17 wird jedes Gesichtselement künstlich beurteilt und identifiziert.

Für jede Person wird eine aus einer Gruppe von oben erwähnten Objekten bestehende Gesichtsidentifikations-Anordnung angefertigt. Diese überträgt Eingaben von diesen Gesichtsidentifikations-Anordnungen zu dem Gesichtsidentifikations-Dispositionsteil 17. Bei Objekten des Gesichtsidentifikations-Dispositionsteiles gibt es auf der Grundlage vieler Signale, die von den Gesichtsidentifikations-Dispositionsteilen übertragen werden, ein Gesicht aus, das durch Beurteilung desselben das höchste Übereinstimmungsniveau aufweist. Demzufolge wird es durch die parallele Disposition von hunderten und tausenden von Gesichtsdaten möglich, ein von der Kamera 11 aufgenommenes Gesicht in einem Moment zu identifizieren.

Bei dieser Ausführung handelt es sich bei dem Erkennungsziel um Bilder, wobei es aber möglich ist, mindestens ein Element aus Animation, stationären Bildern, Linien, Punkten, Wörtern, Schriftzeichen, Stimmen, Geräuschen, Zeiten und elektrischen Signalen auszuwählen.

Weiterhin wird bei dieser Ausführung eine Kamera als Sensor verwendet, wobei es aber möglich ist, mindestens ein Element aus einer Kamera, einem Bildscanner, einem Mikrofon, einem Thermometer, einem Zeitgeber und einem Schalter auszuwählen.

Darüber hinaus handelt es sich bei dieser Ausführung bei der Vordisposition um Mustervergleich, wobei es aber möglich ist, mindestens ein Element aus Informationsverfolgung, Funktionieren, An-Aus-Signalgebung, Numerierung, Koordination, Parametrierung und Gliederung auszuwählen.

### (Zweite Ausführung)

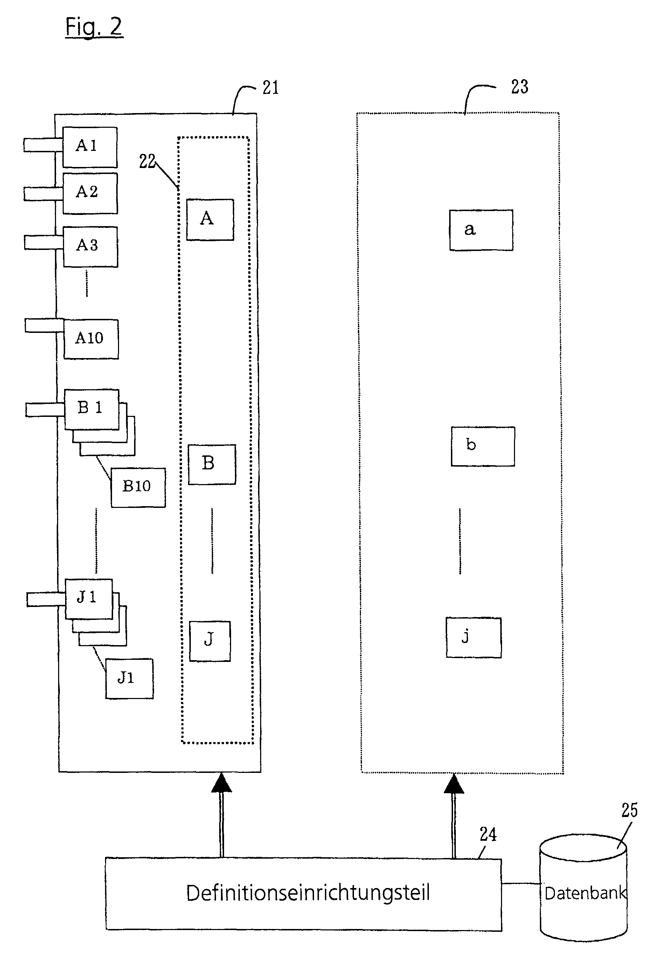

Nachfolgend wird die zweite Ausführung in Übereinstimmung mit der vorliegenden Erfindung unter Bezugnahme auf Fig. 2 erklärt. Bei dieser Ausführung handelt es sich um ein System, das negative Anzeichen durch ungewöhnliches Backen mit Feuer durch mit der Zeit auftretende Temperaturänderungen in direkt beheizten Backöfen erlangt. Hierbei vergleicht das System viele Temperatursensoren (Thermopaare) mit den zuvor einstellten Temperaturen und findet die Probleme (einschließlich Sensorstörungen).

Hierbei ist 21 der Block eines Temperatursensors und 22 ist ein Objektbehälter mit Erkennungsziel-Beurteilungsobjekten A, B, ...J. Die Temperatursensoren sind an 100 Punkten von A1, A2, ... A10, B1, B2, ... B10, C1, C2, ... C10 bis J1, J2, ... J1 in dem direkt beheizten Backöfen vorhanden. Sie sind in 10er-Gruppen von A-J eingeteilt. Auf den in 21 und 23 bereitgestellten Erkennungsziel-Beurteilungsobjekten und Erkennungssignal-Übertragungsobjekten wird die Datendefinition und die Objektdefinition durch das Definitionseinrichtungsteil 24 eingerichtet. 25 ist eine Datenbank, in der die Datendefinition und die Objektdefinition aufgezeichnet wird, und ist mit dem Definitionseinrichtungsteil 24 verbunden.

Das Definitionseinrichtungsteil 24 entnimmt die Datendefinition und die Bedingungsdaten aus der Datenbank 25, um verschiedene Beurteilungen durchzuführen, und richtet sie für jedes der jeweiligen Erkennungssignal-Übertragungsobjekte a, b, ...j ein.

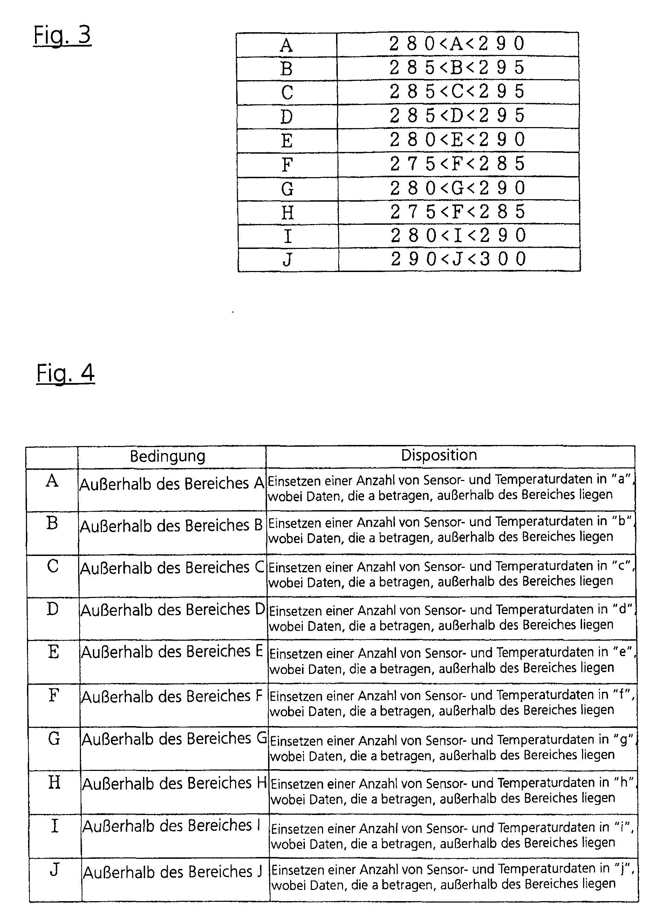

Als Nächstes wird deren Disposition konkret erklärt. Fig. 3 ist eine Datentabelle, die die auf den Erkennungsziel-Beurteilungsobjekten A, B, ... J eingerichteten Daten darstellt, wobei die Daten die Temperatur (°C) in einer spezifischen Zeit angeben. Hierbei wird der Temperaturbereich eines jeden Blockes A, B, ... J dargestellt. Die Datendefinition von A beträgt 280∼290°C, und die Temperatursensoren A1, A2, ... A10 im Block A vergleichen die erkannte Temperatur mit dieser Datendefinition. Auf dieselbe Art und Weise führt der Block B...J einen Vergleich durch.

Jede Bedingung ist in Fig. 4 dargestellt. Objekt A prüft beispielsweise den Block A und gibt an das Objekt "a" eine Anzahl von Sensordaten gemeinsam mit seinen Temperaturdaten aus, die außerhalb des Bereiches von 280∼290°C liegen. Auf dieselbe Art und Weise auf dieselbe Art und Weise wird jeder Block B...J mit jeder Bedingung verwendet.

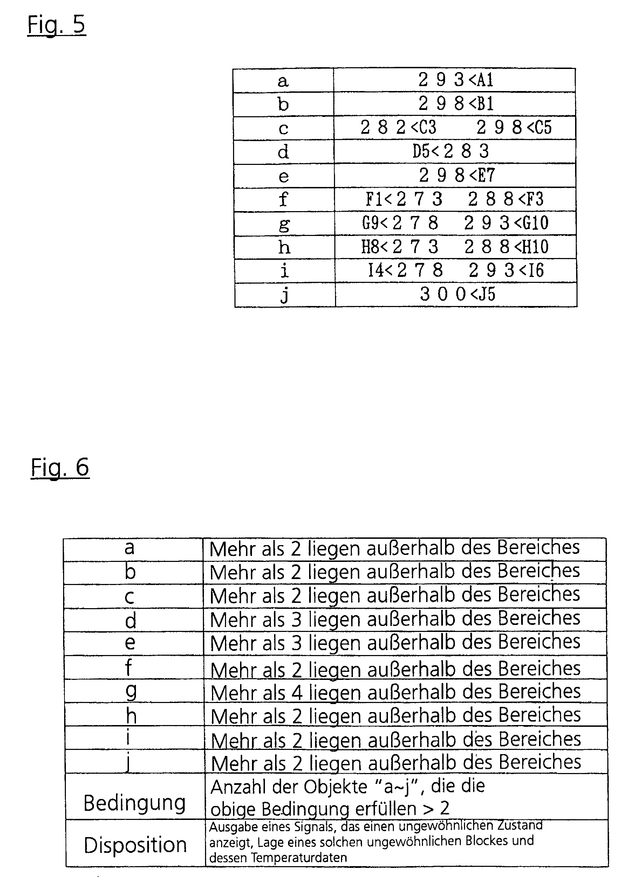

In Fig. 5 ist die Anzahl von durch jedes Objekt übernommenen Sensor- und Temperaturdaten dargestellt. Wenn die Sensoren im Block A betrachtet werden, wird die Temperatur von Sensor A1, wenn sie über 293°C liegt, in der Form von [293<A1] auf dem Objekt "a" von Objekt A zu Objekt "a" ausgegeben. Auf dieselbe Art und Weise geben die Objekte B...J die Daten, die außerhalb der Grenzen von Fig. 3 liegen, an jedes Objekt "b", "c", ... "j" aus. In Fig. 6 sind die Objektdefinitionen der Objekte "a", "b", "c", ... "j" angegeben.

Wenn mehr als 2 Objekte vorhanden sind, die die in Fig. 6 dargestellte Objektbedingung erfüllen, d. h. wenn 2 außergewöhnliche Blöcke vorhanden sind, gibt es ein Signal aus, das zeigt, daß dies ungewöhnlich ist, gemeinsam mit seiner Blocknummer und den Temperaturdaten der ungewöhnlichen Teile. Bei der hier beschriebenen Ausführung zünden die Objekte "c", "f", "h" und "I", und das Ungewöhnlich-Signal wird gemeinsam mit der Blocknummer C, F, H und I und jeweils den Temperaturdaten durch Vergleich der Bedingungen von Fig. 6 mit den Ausgabeergebnissen an die Objekte von Fig. 5 ausgegeben.

### (Dritte Ausführung)

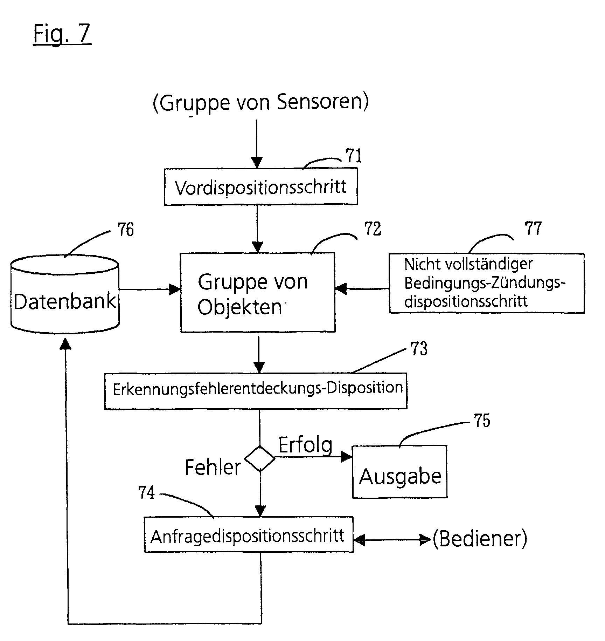

Fig. 7 gibt einen Überblick über die dritte Ausführung. Bei diesem Vorgang wird bei einem Signal von einer Gruppe von Sensoren eine Vordisposition durchgeführt, um bei 71 Daten zu erzeugen, und die in der Datenbank 76 aufgezeichnete Datendefinition wird auf dem Objekt eingerichtet, wobei eine bei einer Gruppe von Objekten 72 durchgeführte Erkennungsdisposition bereits vollständig erklärt wurde.

Wenn bei dem oben erwähnten Erkennungsvorgang eine Situation auftritt, in der die Erkennung nicht durchgeführt werden kann oder bei der Erkennung ein Fehler auftritt, wird in einem Erkennungsfehlerentdeckungs-Dispositionsschritt 73 diese Situation abstrahiert und einem Anfragedispositionsschritt 74 übergeben. Der Anfragedispositionsschritt 74 ist eine Disposition, die ein menschliches Wesen, wie beispielsweise einen Bediener oder Experten benachrichtigt, eine Eingabe von dieser Person empfängt und diese in der Datenbank 76 registriert.

In dem nicht vollständigen Bedingungs-Zünddispositionsschritt 77 überprüft ein DEMON, der eine Gruppe von Objekten 72 ständig überwacht, einen Speicher eines jeden Objektes alle 2 Sekunden, und wenn dort eine Zündbedingung vorhanden ist, selbst bei einer mit der Eigenschaft nicht vollständig, überprüft er ein auf dem untergeordneten Informationsstrom vorhandenes Objekt und veranlaßt das Objekt, wenn notwendig, zur Zündung, oder setzt seinen Speicher zurück.

In der obigen Beschreibung überprüft der DEMON eine Gruppe von Objekten alle 2 Sekunden. Es sollte jedoch bemerkt werden, daß dies entsprechend dem Erkennungsziel geändert wird und nicht auf dieses Beispiel begrenzt ist.

Wie oben gemäß der vorliegenden Erfindung erklärt ist, ist die Disposition von unnötig großen Bildern nicht notwendig, wenn Bilddispositionen vorhanden sind, und die Disposition eines minimalen Volumens notwendiger Bilder erfordert genügend Verarbeitungsaufwand, wodurch hierbei der Vorteil einer Systemverkleinerung vorhanden ist.

Auf dieselbe Art und Weise wird auch bei der Disposition von Sensorinformationen, außer bei Bildern, wenn viele Sensoren vorhanden sind, oder wenn es notwendig und zu kompliziert ist, die von jedem Sensor aufgenommenen Bedingungen zu entsorgen, einfach die notwendige Disposition ohne die unnötige Disposition durchgeführt. Die Erfindung weist den Vorteil auf, daß eine wirksame Verwendung von Informationen von den Sensoren möglich ist.

Durch Hinzufügen einer Rückmeldung, die die Beurteilung durch einen Bediener oder Know-how aufnimmt, kann ein Wachstumsvorgang stattfinden, der die Erkennungsgenauigkeit steigert.

## Patentansprüche

1. Erkennungsziel-Identifikationscomputersystem,
**dadurch gekennzeichnet, daß**
das System folgendes umfaßt:
Sensormittel zur Erkennung eines Erkennungszieles; mit dem Sensormittel zwecks Vordisposition der von dem Sensormittel aufgenommenen Daten verbundene Datendispositionsmittel;
mit dem Datendispositionsmittel verbundene Objekte, die zünden und ausgeben, wenn es die aufgezeichnete Definition und die aufgezeichnete Zündbedingung erfüllt;
ein Objektdefinitionswörterbuch zur Aufzeichnung der Definition von Zielteilen des Erkennungszieles; und;
mit dem Objektdefinitionswörterbuch und den Objekten verbundenes Definitionseinrichtungsmittel (15, 24) zur Übernahme der Definition der Zielteile des Erkennungszieles aus dem Definitionswörterbuch heraus, und zur Aufzeichnung derselben in dem Objekt.

2. Erkennungsziel-Identifikationscomputersystem,
**dadurch gekennzeichnet, daß**
das System folgendes umfaßt:
Sensormittel zur Erkennung eines Erkennungszieles; mit dem Sensormittel zwecks Vordisposition der von dem Sensormittel aufgenommenen Daten verbundene Datendispositionsmittel;
mit dem Datendispositionsmittel verbundene Erkennungsziel-Beurteilungsobjekte, die nur dann zünden und ausgeben, wenn Erkennungszieldaten vorhanden sind, die die aufgezeichnete Datendefinition und aufgezeichnete Zündbedingung erfüllen;
eine Mehrzahl von Erkennungssignal-Übertragungsobjekten (a, b, ...j) mit hierarchischer Konstruktion mit Selbstbezeichnungselement(en), wobei jedes der Erkennungssignal-Übertragungsobjekte (a, b, ...j) mit den Erkennungsziel-Beurteilungsobjekten (A, B, ... J) so verbunden ist, daß es sich auf die darin festgelegte Objektdefinition bezieht, sich selbst als ein an das Objekt auszugebendes Objekt bezeichnet, das die Objektdefinition und Zündbedingung erfüllt, und das so konstruiert ist, daß es ihre Ausgaben, Zünd- und Ausgabesignale beurteilt, wenn es die Definition und die Zündbedingung erfüllt;
ein Objektdefinitionswörterbuch zur Aufzeichnung der Definition von Zielteilen des Erkennungszieles und der Objektdefinition; und
mit dem Definitionswörterbuch, den Erkennungsziel-Beurteilungsobjekten (A, B, ... J) und den Erkennungssignal-Übertragungsobjekten (a, b, ...j) verbundenes Definitionseinrichtungsmittel zur Übernahme der Datendefinition und der Objektdefinition aus dem Definitionswörterbuch heraus, und zur Aufzeichnung derselben in dem jeweiligen Objekt.

3. Erkennungsziel-Identifikationscomputersystem, definiert in Anspruch 1 oder 2,
**dadurch gekennzeichnet, daß**
es sich bei der Vordisposition um mindestens ein Element aus Mustervergleich, Informationsverfolgung, Funktionieren, An-Aus-Signalgebung, Numerierung, Koordination, Parametrierung und Gliederung handelt.

4. Erkennungsziel-Identifikationscomputersystem, definiert in einem beliebigen der Ansprüche 1-3,
**dadurch gekennzeichnet, daß**
es sich bei dem/den Sensormittel(n) um mindestens ein Element aus einer Kamera (11), einem Bildscanner, einem Mikrofon, einem Thermometer, einem Zeitgeber und einem Schalter handelt.

5. Erkennungsziel-Identifikationscomputersystem, definiert in Anspruch 4,
**dadurch gekennzeichnet, daß**
es sich bei dem/den Sensormittel(n) um Wahrnehmungsmittel zur Wahrnehmung mindestens eines Elementes aus Animation, stationären Bildern, Linien, Punkten, Wörtern, Schriftzeichen, Stimmen, Geräuschen, Zeiten und elektrischen Signalen handelt.

6. Erkennungsziel-Identifikationscomputersystem, definiert in einem beliebigen der Ansprüche 1-5,
**dadurch gekennzeichnet, daß**
das System weiterhin folgendes umfaßt:
ein Erkennungsfehlerentdeckungs-Dispositionsmittel, das mit den Objekten verbunden ist, um ein Erkennungssignal zu erzeugen, wenn es bei der Erkennung eines Eingangssignals erfolgreich ist, oder ein Erkennungsfehlersignal, wenn es bei der Erkennung nicht erfolgreich ist;
mit dem Erkennungsfehlerentdeckungs-Dispositionsmittel verbundenes Anfragedispositionsmittel zur Anfrage an einen Bediener gemäß dem Erkennungsfehlersignal;
mit dem Anfragedispositionsmittel verbundenes Antwortbeschaffungsmittel zur Beschaffung einer Antwort von dem Bediener, und
mit dem Antwortbeschaffungsmittel und den Objekten verbundenes Antwortregistrierungs-Dispositionsmittel zur Registrierung der Antwort von dem Antwortbeschaffungsmittel in dem Objektdefinitionswörterbuch.

7. Erkennungsziel-Identifikationscomputersystem, definiert in Anspruch 1,
**dadurch gekennzeichnet, daß**
das System weiterhin folgendes umfaßt:
nicht vollständige Bedingungs-Zünddispositionsmittel zur Beobachtung eines jeden der Objekte und
zur Ermittlung des dazugehörigen Objektes, um dasselbe zünden zu lassen, wenn notwendig, oder um den Speicher zurückzusetzen, wenn einige der Zündbedingungen erfüllt sind.

8. Erkennungsziel-Identifikationscomputerverfahren,
**dadurch gekennzeichnet, daß**
das Verfahren die folgenden Schritte umfaßt:
Einrichtung von Datendefinitionen auf Objekten gemäß einem Erkennungsziel;
Aufnahme von Daten des Erkennungszieles durch Sensormittel;
Vordisposition der von dem Sensormittel aufgenommenen Daten;
Vergleich der vordispositionierten Daten mit der zuvor eingerichteten Datendefinition und Zündung und Ausgabe, wenn ein Erkennungsziel vorhanden ist, das die aufgezeichnete Definition und die Zündbedingung erfüllt;
Zurücksetzen von durch das Objekt gemäß der zuvor eingerichteten Definition erhaltenen Daten; und
Ausgabe eines Erkennungssignals, wenn die Erkennung des Eingangssignals abgeschlossen ist.

9. Erkennungsziel-Identifikationscomputerverfahren,
**dadurch gekennzeichnet, daß**
das Verfahren die folgenden Schritte umfaßt:
Einrichtung einer Datendefinition auf Erkennungsziel-Beurteilungsobjekten und einer Objektdefinition auf einer Mehrzahl von Erkennungssignal-Übertragungsobjekten (a, b, ...j) mit hierarchischer Konstruktion jeweils gemäß eines Erkennungszieles;
Bezeichnung eines der Erkennungssignal-Übertragungsobjekte als einen Ausgabeort zu dem Erkennungsziel-Beurteilungsobjekt, das die Datendefinition und die Zündbedingung erfüllt, unter Bezugnahme auf die Datendefinition;
Aufnahme von Daten des Erkennungszieles durch das Sensormittel;
Vordisposition der durch das Sensormittel aufgenommenen Daten;
Informieren des zuvor festgelegten Erkennungssignal-Übertragungsobjektes, wenn die Vordispositionsdaten der Datendefinition und der Zündbedingung entsprechen;
Übernahme der Ausgabe von dem Objekt nur dann, wenn es durch das zuvor festgelegte Erkennungsziel-Beurteilungsobjekt oder das Erkennungssignal-Übertragungsobjekt im Voraus informiert wurde;
Zurücksetzen der von dem Objekt selbst erhaltenen Daten gemäß der Definition;
Vergleich der von dem zuvor festgelegten Objekt erhaltenen Ausgabe mit der Objektdefinition und
Informieren des zuvor festgelegten Erkennungssignal-Übertragungsobjektes, wenn es die Definition erfüllt;
Ausgabe eines Erkennungssignals, um den Erfolg bei der Erkennung zu zeigen, wenn die von dem bezeichneten Objekt erhaltene Ausgabe die Objektdefinition an dem Erkennungssignal-Übertragungsobjekt höchsten Niveaus erfüllt.

10. Erkennungsziel-Identifikationscomputerverfahren, definiert in Anspruch 8 oder 9,
**dadurch gekennzeichnet, daß**
es sich bei der Vordisposition um mindestens ein Element aus Mustervergleich, Informationsverfolgung, Funktionieren, An-Aus-Signalgebung, Numerierung, Koordination, Parametrierung und Gliederung handelt.

11. Erkennungsziel-Identifikationscomputerverfahren, definiert in einem beliebigen der Ansprüche 8-10,
**dadurch gekennzeichnet, daß**
es sich bei dem/den Sensormittel(n) um mindestens ein Element aus einer Kamera (11), einem Bildscanner, einem Mikrofon, einem Thermometer, einem Zeitgeber und einem Schalter handelt.

12. Erkennungsziel-Identifikationscomputerverfahren, definiert in Anspruch 11,
**dadurch gekennzeichnet, daß**
es sich bei dem/den Sensormittel(n) um Wahrnehmungsmittel zur Wahrnehmung mindestens eines Elementes aus Animation, stationären Bildern, Linien, Punkten, Wörtern, Schriftzeichen, Stimmen, Geräuschen, Zeiten und elektrischen Signalen handelt.

13. Erkennungsziel-Identifikationscomputersystem, definiert in einem beliebigen der Ansprüche 8-12,
**dadurch gekennzeichnet, daß**
das Verfahren weiterhin folgende Schritte umfaßt:
Erzeugung des Erkennungssignals, wenn es bei der Erkennung eines Eingangssignals erfolgreich ist, oder eines Erkennungsfehlersignals, wenn es bei der Erkennung nicht erfolgreich ist;
Anfrage an einen Bediener gemäß dem Erkennungsfehlersignal;
Beschaffung einer Antwort von dem Bediener, und
Registrierung der Antwort von dem Antwortbeschaffungsmittel in dem Objektdefinitionswörterbuch.

14. Erkennungsziel-Identifikationscomputerverfahren, definiert in Anspruch 8,
**dadurch gekennzeichnet, daß**
das Verfahren weiterhin einen Schritt mit einem nicht vollständigen Bedingungs-Zünddispositionsmittel-Schritt umfaßt, der folgendes umfaßt:
Beobachtung des jeweiligen Objektes, und wenn einige der Zündbedingungen erfüllt sind, Ermittlung des dazugehörigen Objektes, um dasselbe zünden zu lassen, wenn notwendig, oder um einen Speicher zurückzusetzen.
